# EUROPEAN PATENT APPLICATION

(11) **EP 3 188 502 A1**
(43) Date of publication of application: **05.07.2017**
(21) Application number: 16207640.0
(22) Date of filing: 30.12.2016
(51) Int. Cl.: H04R 1/10

(54) **WIRELESS EARPHONE AND CONTROLLING METHOD OF SAME**

(30) Priority: 02.01.2016 US 201662274259 P
(71) Applicant: Erato (Cayman) Holdings Co., Ltd., 1-1208 Grand Cayman (KY); Mavin Technology Inc, Hsinchu County 302 (TW)
(72) Inventor: Hung, Su-Yu, Chupei City (TW); Chen, Chen-Chun, 235 New Taipei City (TW); Liao, Chia-Nan, Chupei City (TW)
(74) Representative: Cordina, Kevin John

(57) **Abstract**

A wireless earphone able to accept local user input for controlling of an independent audio-transmitting and communications device includes at least an input unit and a microcontroller. Various input modes and corresponding function-executing instructions are stored in the microcontroller. A user may apply different types of input to the input unit. Upon recognizing one input mode based on the user's input, the microcontroller executes one corresponding instruction to switches between operating modes of the wireless earphone.

## Description

### FIELD

The present disclosure herein generally relates to wireless earphones and the controlling methods.

### BACKGROUND

Many media players, smart phones, video game players, laptops, personal computers, and other electronic devices can provide audio contents to users. The audio contents may be music, phone calls, broadcasting programs, an audio part of a video or a game, etc. To avoid disturbing others, people can use earphones to listen to the audio contents. Conventional earphones connect an audio content providing device through earphone cables. Earphone cables are liable to knot and inconvenient to store. Upon connecting to audio content providing devices, earphone cables also restrict users' movement and the tugging involved can cause damage to either the earphones or the audio content providing device.

Wireless earphones have become a popular alternative to conventional earphones. For users wearing wireless earphones, they can travel throughout a certain area without taking the audio content providing device. However, when the user is relatively far away from the audio content providing device, switching the audio content or turning down the volume is a problem. In the case that the audio content providing device is a smart phone, the user may also need to answer a phone call. Accordingly, to improve the user's experience and functionalities of earphones, there is a need in the art for methods and devices to switch operating modes and/or trigger functions of wireless earphones through users' input to the wireless earphones.

### SUMMARY

The present disclosure generally relates to a wireless earphone and a method of controlling the wireless earphone. A method of controlling a wireless earphone, the wireless earphone comprising an input unit and a microcontroller, the method comprising: storing a plurality of input modes and a plurality of instructions in the microcontroller; providing relationships between the plurality of input modes and the plurality of instructions to the microcontroller; receiving an input applied to the input unit; recognizing, by the microcontroller, one input mode of the plurality of input modes based on the input; executing, by the microcontroller, one of the plurality of instructions corresponding to the recognized input mode.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.
FIG. 1 is an illustration of exemplary communications configurations of an earphone set and an audio content providing device.
FIG. 2A is a front perspective view of an exemplary embodiment of an earphone of the present disclosure.
FIG. 2B is a rear perspective view of the earphone in FIG. 2A.
FIG. 3 is a circuit block diagram of the earphone in FIG. 2A.
FIG. 4 is a flow diagram illustrating an exemplary embodiment for switching between operating modes of the earphone.
FIG. 5 is a flow diagram illustrating an exemplary embodiment for switching between operating modes of the earphone by recognizing different input modes of a user.
FIG. 6 is a flow diagram illustrating an exemplary method of user input modes triggering various media control functions of the earphone in a media mode.
FIG. 7A is a flow diagram illustrating an exemplary method of user input modes triggering various call control functions of the earphone in a call mode when the user receives a call.
FIG. 7B is a flow diagram illustrating an exemplary method of user input modes triggering various call control functions of the earphone in a call mode.
FIG. 8A is a left-side view of an exemplary embodiment of an opened earphone case, one earphone is inside the earphone case.
FIG. 8B is a lateral view of the exemplary embodiment of the opened earphone case, one earphone is inside the earphone case and another earphone is partially outside the earphone case.
FIG. 9A is a perspective view of the exemplary embodiment of the earphone case when closed, the case being capable of connecting with a USB cable.
FIG. 9B is an enlarged view of a dotted line region of the earphone case in FIG. 9A.
FIG. 10A is an illustration of a first embodiment of a stabilizer able to couple to an earphone.
FIG. 10B is an illustration of the first embodiment of the stabilizer coupled with the earphone.
FIG. 10C is an illustration of the first embodiment of the stabilizer coupled with the earphone in an ear of a user.
FIG. 11A is a perspective view of a second embodiment of the stabilizer.
FIG. 11B is a perspective view of a third embodiment of the stabilizer.
FIG. 11C is a perspective view of a fourth embodiment of the stabilizer.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "outside" refers to a region that is beyond the outermost confines of a physical object. The term "comprising," when utilized, indicates "including, but not necessarily limited to"; it specifically indicates open-ended inclusion or membership in the so-described combination, group, series and the like.

The present disclosure described herein relates to an earphone.

The earphone disclosed in the present application includes at least a wireless module, a speaker, a battery, and a housing. The earphone is configured to have wireless connections to an audio content providing device. The audio content providing device is capable of generating or acquiring audio data and transmitting the audio data through wireless connections to the earphone. The audio data may be part of multi-media data. For example, the audio data may be the audio part of a video clip or a video streaming data. The audio data may be a recorded sound, such as a voice message or a song. The audio data may be generated from voice phone call or audio part of video phone call by a smart phone.

The wireless module is configured to receive wireless signals and to process the received signals into audio signals for the speaker. The wireless signals may have a frequency within Industrial Scientific Medical Band (ISM band), such as 2.4 GHz. Generally, Wi-Fi, BLUETOOTH, or other proprietary protocols may be used for the communication between the earphone and the audio content providing device. The wireless module may include multiple electrical components integrated on a printed circuit board, or integrated in a chip scale package.

The battery is configured to provide electrical power to the earphone. The battery may be a primary battery or a secondary battery. Preferably, the secondary battery, such as lithium-ion batteries, can be applied according to its rechargeability, sufficient energy density, fast charging, and safety. The battery of the earphone may have features of a small volume with steady discharge voltage, while a battery in a relating earphone case used for charging the earphone may have features of a large capacity.

Furthermore, to provide a user with general control of operating modes and functions of the earphone, the earphone of the present disclosure further includes a microcontroller and a user interface. The user interface may include an input unit configured to receive the user's input. A plurality of input modes and a plurality of instructions may be stored in a memory of the microcontroller. Relationships between the plurality of input modes and the plurality of instructions are predetermined and also stored in the memory. When an input from the user matches a corresponding input mode of the plurality of input modes, the microcontroller of the earphone may execute a corresponding instruction of the plurality of instructions.

The user's input may be a force-based input applied to the input unit. The input unit may be embodied as a button of the earphone. The button may be a push button or a toggle switch. Generally, the button is activated when a mechanical force is applied on the button and thus an underlying electrical circuit is connected. The button is inactivated when the mechanical force is removed from the button. The user may press the button for a certain period of time, that is, the button is being activated for the certain period of time. The earphone may be configured to recognize the duration of the activation of the button upon being pressed. Thus, the plurality of input modes may differ according to different pressing durations of the button being pressed and/or held. For example, the plurality of input modes may include an extra-long input mode, a very-long input mode, a long input mode, and a short input mode where the activation is based on the duration of an underlying electrical circuit of a button being connected in an exemplary embodiment. The plurality of input modes may also include different types of activation pattern, such as an input of a continuous activation-inactivation-activation pattern of the button, specifically a double input mode or pattern. Once the user's input matches one predetermined input mode, the microcontroller of the earphone will execute an instruction of the plurality of instructions associated to the recognized input mode.

The plurality of instructions is configured to switch between operating modes of the earphone. When one input mode is recognized by the microcontroller, the earphone is switched to a corresponding operating mode. The operating modes of the earphone may include a power-off mode, a power-on mode, and a device pairing mode. The power-off mode indicates that the power of the earphone is inactive or the power of the earphone operates at low consumption level to conserve battery energy. The power-on mode indicates the earphone is ready for connection with an audio content providing device. The device pairing mode indicates that the earphone is searching connections with an audio content providing device. When the earphone connects to the audio content providing device, the operating modes may further include a media mode and/or a call mode. The media mode indicates that the audio content providing device connected to the earphone has an active multi-media application and the earphone receives and transmits audio contents of the multi-media application. The call mode indicates that the audio content providing device connected to the earphone is calling and the earphone can receive and broadcast audio contents of the call. It should be noted that the call mode is not limited to normal phone calls, but may also include internet calls or other on-line chatting situations.

Moreover, the plurality of instructions may be also configured to trigger a certain function upon a predetermined input mode. When the earphone is in the media mode, the triggered function may be a media control function, such as content switching, media-pause, media-playback, or volume adjustment. When the earphone is in the call mode, the triggered function may be a call control function, such as call answering, call rejection, call cancelling, or volume adjustment. The user interface may also include an output unit configured to present visual, audio signals, or vibrations to inform the user as to a present operating mode of the earphone. For example, the output unit may be a light emitting diode (LED) that gives various visual signals according to the operating modes. In at least one example, the speaker of the earphone may also be able to inform the user as to a present operating mode, such as delivering a voice message, "device pairing", when the earphone is in the device pairing mode.

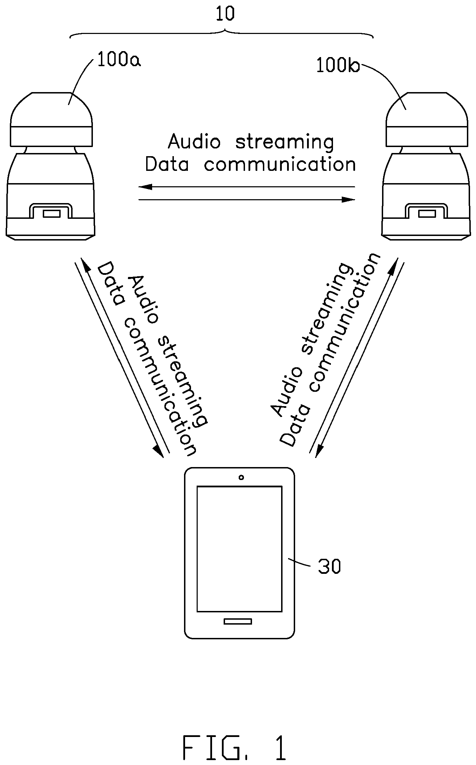

FIG. 1 illustrates exemplary communications configurations of an earphone set 10 and an audio content providing device 30. The earphone set 10 is configured to communicate with the audio content providing device 30 through wireless connections, thus the audio content providing device 30 may provide audio streaming to the earphone set 10. The audio content providing device 30 and the earphone set 10 may exchange data. The audio content providing device 30 may be a mobile phone, a laptop, a television, a video game system, or a sound system. The earphone set 10 includes a left earphone 100a and a right earphone 100b. Both the left earphone 100a and the right earphone 100b may receive audio data through wireless communication from the audio content providing device 30. In some embodiments, the left earphone 100a also has wireless connections to the right earphone 100b to provide audio streaming or data communication. For example, the earphone 100a may send control signals to the other earphone 100b, thus the two earphones 100a and 100b may deliver synchronized music or voice according to the audio data provided by the audio content providing device 30. The earphone set 10 may also provide wireless communication between the left earphone 100a and the right earphone 100b to ensure short signal latency. The earphone set 10 may also provide stereo audio output. In some embodiments, the earphones 100a and 100b have microphones to provide stereo audio recording.

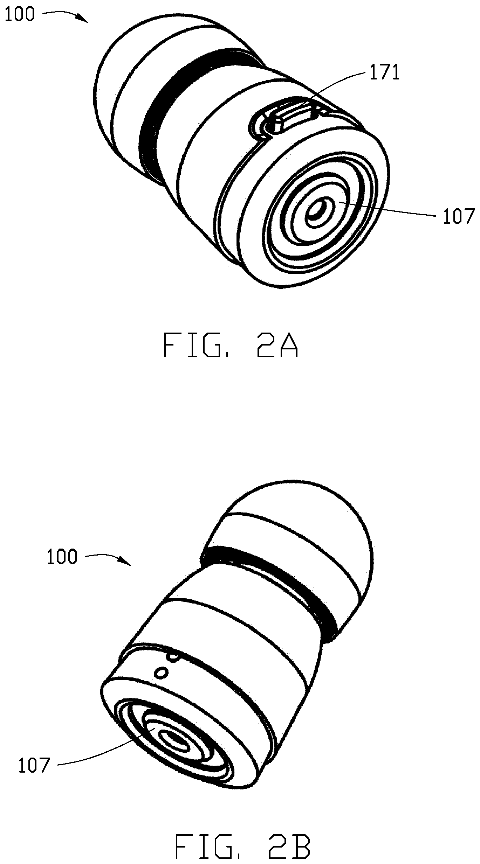

FIGs. 2A and 2B show an exemplary embodiment of an earphone 100. Particularly, the earphone 100 include an input unit 171 configured to provide a general control of operating modes and functions of the earphone 100 for the user. In the present embodiment, the input unit 171 is embodied as a button, and the button is arranged on a housing of the earphone 100. The earphone 100 may further include a microphone (not shown). The microphone is configured for active noise cancellation, sound recording, or/and telephone communication. The earphone 100 may also include a charging port 107. The charging port 107 is configured to have electrical connections to a battery for power charging.

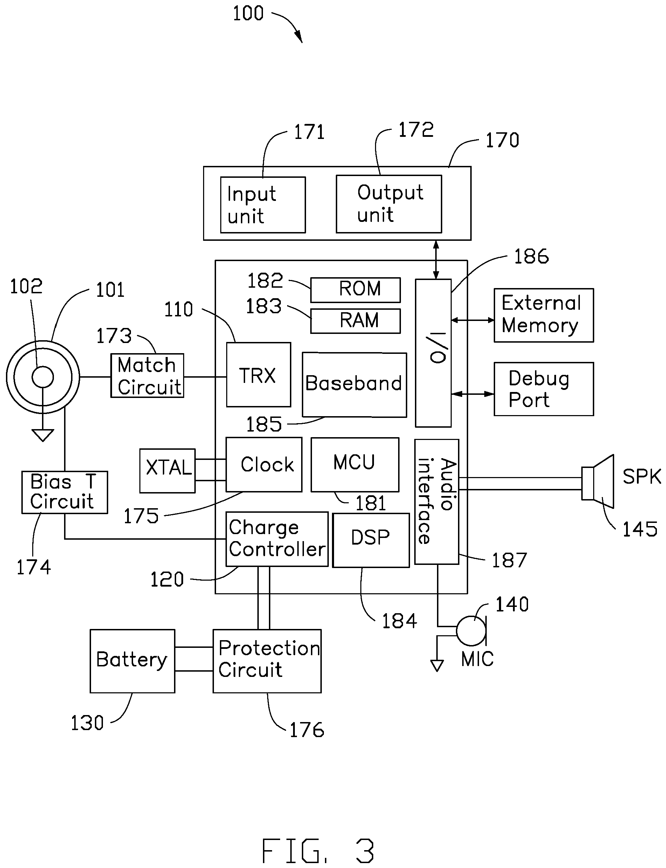

FIG. 3 shows a circuit block diagram of the exemplary embodiment of the earphone 100. The earphone 100 includes a wireless module 110 (TRX), a speaker 145 (SPK), a microphone 140 (MIC), a battery 130, a user interface 170, and a microcontroller unit 181 (MCU). In one example, electronic components, such as a quartz crystal unit (XTAL), a read only memory 182 (ROM), a random-access memory 183 (RAM), a baseband 185, and digital signal processing unit 184 (DSP) may be coupled to the microcontroller unit 181 and located on a modularized printed circuit board. The wireless module 110 may be a BLUETOOTH chip coupled to a match circuit 173 and an antenna 101. The BLUETOOTH chip may include a radiofrequency front end (not shown) to generate and receive radiofrequency signals through the antenna 101. Also, the BLUETOOTH chip may have an audio intermediate radiofrequency front end (not shown) to deliver audio signals processed by the microcontroller unit 181 to the speaker 145. The user interface 170 includes an input unit 171 configured to receive a user's input, and an output unit 172 configured to provide messages or signals to the user. The input unit 171 may be embodied as a button, and the output unit 172 may be embodied as a light indicator to deliver indicating signals.

Referring to FIG. 3, the earphone 100 may further include a charging electrode 102 and a charge controller 120. The charge controller 120 is coupled to the charging electrode 102 and the battery 130. The antenna 101 is coupled to the wireless module 110 and the charge controller 120. In the present embodiment, the antenna 101 is coupled to the wireless module 110 via the match circuit 173 to ensure matching impedance between the antenna 101 and the wireless module 110. The antenna 101 may be coupled to the charger controller 120 via a bias T circuit 174 to shunt the direct electric current to the charger controller 120 when the earphone 100 is in use, to recharge the battery 130. The bias T circuit 174 may also be coupled to the wireless module 110 to shunt the radiofrequency current to the t wireless module 110. In some examples, the bias T circuit 174 may be replaced by a switching module, and the switching module may be coupled to the wireless module 110.

Referring to FIG. 3, the earphone 100 may further include an input/output device 186, an audio interface 187, a crystal clock 175, and a protection circuit 176. In at least one example, a portion of the abovementioned electronic components may be embedded on a printed circuit board for ease of mass production and volume minimization of the wireless earphone. The microphone 140 may be coupled to the audio interface 187 to receive sounds of environment or the user. The audio interface 187 may have noise cancellation function to eliminate ambient noise so that the speaker 145 is capable of delivering high quality sound or may amplify certain frequencies of sound, for example, human speech. With the microphone 140, the earphone 100 may serve as a wireless intercom, a hearing aid, or a sound amplifying device.

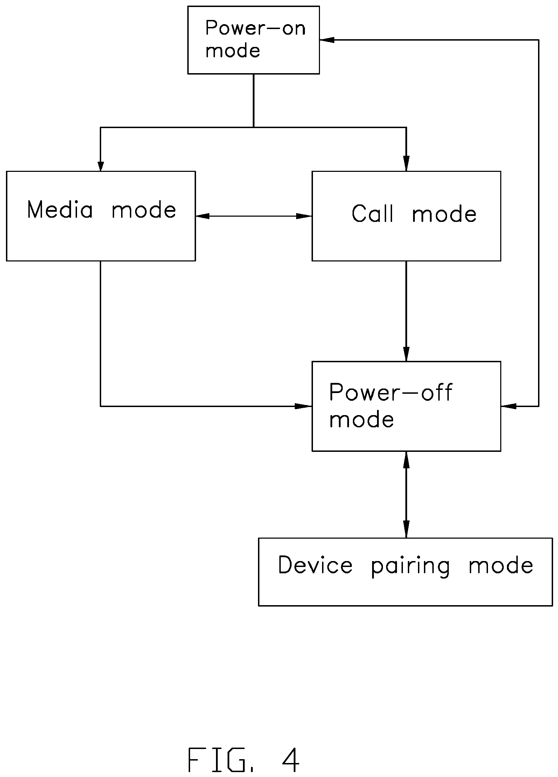

In one exemplary process shown in FIG. 4, the earphone may switch from one operating mode to another operating mode. The earphone may be initially set to a power-off mode, that is, the power of the earphone being inactive or at low consumption level to conserve battery energy. The earphone may switch from the power-off mode to a power-on mode or a device pairing mode. The power-on mode indicates that the earphone is ready for connection with an audio content providing device. The device pairing mode indicates that the earphone is searching connections with an audio content providing device. When the earphone connects to the audio content providing device, the earphone may switch from the power-on mode to a media mode or to a call mode. The media mode indicates that the audio content providing device connected to the earphone has an active multi-media application, and the earphone may receive and broadcast the audio contents of the multi-media application. The call mode indicates that the audio content providing device connected to the earphone has a call, and the earphone may receive and broadcast the audio contents of the call. The earphone at media mode may be switched to the call mode and may be switched back to the media mode. All operating modes may be switched back to the power-off mode.

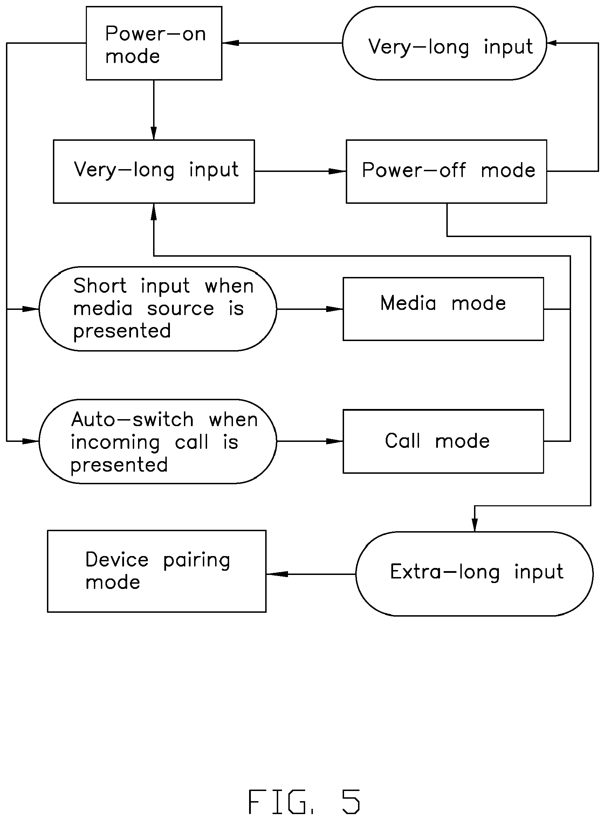

FIG. 5 shows an exemplary embodiment for switching between the operating modes of the earphone upon recognizing a certain input mode of a user. Herein, the earphone in the power-off mode may be switched to the device pairing mode upon recognizing an extra-long input mode. The earphone in the power-off mode may be switched to the power-on mode upon recognizing a very-long input mode. When a media source is presented, the earphone in the power-on mode may be switched to the media mode upon recognizing a short input mode. Additionally, when an incoming call is presented the earphone in the power-on mode may be switched to the call mode automatically. The power-on mode, the media mode, and the call mode may be switched to the power-off mode by the very-long input.

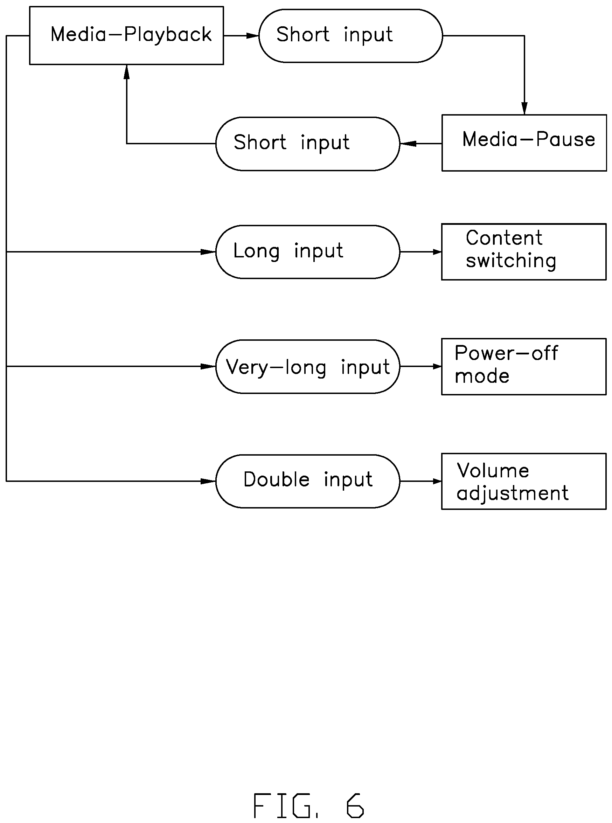

Based on the embodiment shown in FIG. 5, FIG. 6 presents a method of triggering various media control functions of the earphone in the media mode upon recognizing the input modes. When the earphone connects to the audio content providing device and the earphone is in the media mode, the media control functions that may be triggered by a certain input mode may include content switching, media-pause, media-playback, and volume adjustment. As illustrated in FIG. 6, the recognized short input mode may trigger media-playback function when media content is available to playback or when a media content is paused. The recognized short input mode may also trigger media-pause function when playback of a media content. A recognized long input mode may trigger content switching function when playback of a media content. The content switching function may forward the playback of the media content to a next section or backward to a previous section. A recognized double input mode may trigger volume adjustment function to adjust audio volume. Particularly, for an earphone set including a right earphone and a left earphone, the content switching function may include a content switching forward function and a content switching backward function, and the volume adjustment function may include a volume increasing function and a volume decreasing function. Thus, by recognizing a user's input applied to an input unit of the right earphone or an input unit of the left earphone, more specific media control functions may be accomplished. In one example, an earphone set, including a right earphone and a left earphone, is connected to an audio content providing device. Each of the right earphone and the left earphone has a button as an input unit. When the audio content providing device is playing a list of songs, upon recognizing the long input mode applied to the button of the right earphone by the user, the playback of audio content may go forward to the next song. Upon recognizing the long input mode applied to the button of the left earphone, the playback of audio content may go backward to the previous song. Upon recognizing the double input mode applied to the button of the right earphone, the audio volume is increased, and upon recognizing the double input mode applied to the button of the left earphone, the audio volume is decreased.

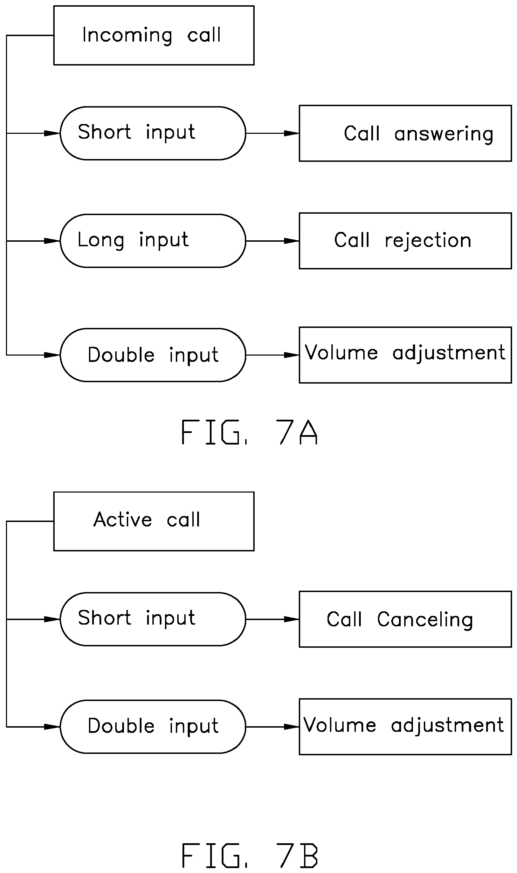

Based on the embodiment shown in FIG. 5, FIGs. 7A-7B show methods of triggering various call control functions of the earphone in the call mode, upon recognizing different input modes. The call control functions may include call answering, call rejection, call canceling, and volume adjustment. As shown in FIG. 7A, when an incoming call is presented the user may trigger the call answering function by an input that is recognized as the short input mode, and the user may trigger the call rejection function by an input that is recognized as a long input mode. As shown in FIG. 7B, when giving a call the user may triggers the call canceling function by an input that is recognized as the short input mode. In both situations, the user may trigger the volume adjustment function by an input that is recognized as the double input mode.

Referring to the input modes described in FIGs. 5, 6, 7A, and 7B, in an embodiment of an earphone with a button as the input unit, the short input mode, the double input mode, the long input mode, the very long input mode, and the extra-long input mode may be predetermined as follows. In an exemplary embodiment, the short input mode indicates a short pressing duration of the button for less than 0.5 seconds. The double input mode indicates the button is activated with two quick short inputs (presses) spaced with a short duration between them, for example 0.5 seconds. The long input mode indicates that the button is pressed for about two seconds. The very-long input mode indicates that the button is pressed for three to four seconds. The extra-long input mode indicates that the button is pressed for a duration of six to seven seconds.

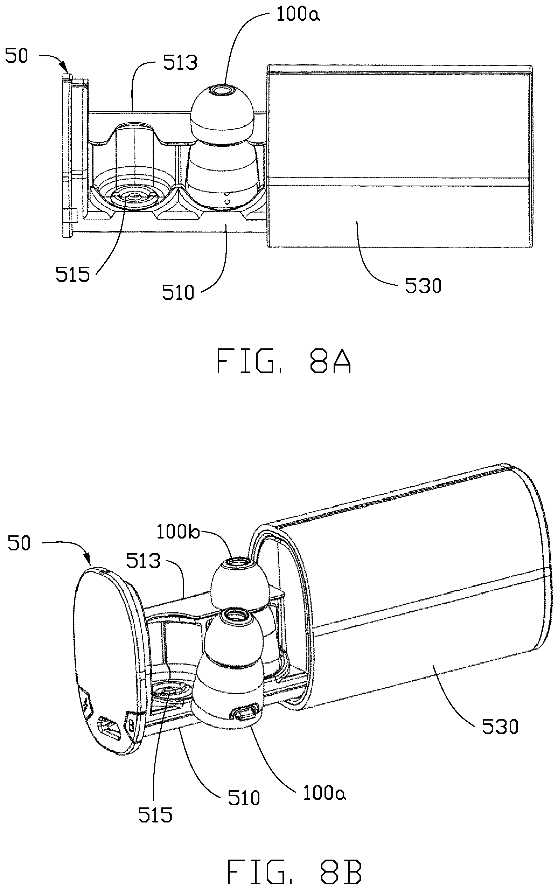

The present disclosure also provides an earphone case configured for charging the earphone. The charging case is configured to recharge the battery of the earphone. FIGs. 8A-8B show one exemplary embodiment of the earphone case. In FIGs. 8A-8B, the earphone case 50 is shown in an open mode and one earphone 100a is placed inside the earphone case 50. The earphone case 50 includes a charging assembly 510 and a container 530. The charging assembly 510 may be accommodated in the container 530. In the present embodiment, the charging assembly 510 is configured to be a drawer. However, the charging assembly 510 can also be a hook assembly, a protrusion to retain the earphone 100a, or a mechanism retaining the earphone 100a within its proximity through magnetic forces. The structure of the charging assembly 510 is not limited to the descriptions in the exemplary embodiment. In the exemplary embodiment, the charging assembly 510 includes a earphone rack 513, a battery (not shown), and at least one charging dock 515. The charging dock 515 includes a pair of charging electrodes (not shown) for providing electrical connections between the battery of the earphone 100a and the battery of the earphone case 50. As shown in FIGs. 8A-8B, the earphone case 50 includes the earphone rack 513 and two charging docks 515, to accommodate a pair of earphones 100a and 100b. The earphone 100a is placed on one charging dock of the drawer portion 530 while being stabilized and supported by the earphone rack 513. In at least one example, the charging dock 515 is configured to be a directionless charging dock being compatible with the directionless charging port 107 of the earphone 100. Preferably, the electrodes of the charging dock 515 and the electrodes of the charging port 107 are arranged in radial symmetry. As a result, the user may place the earphone 100 on the charging dock 515 in any direction.

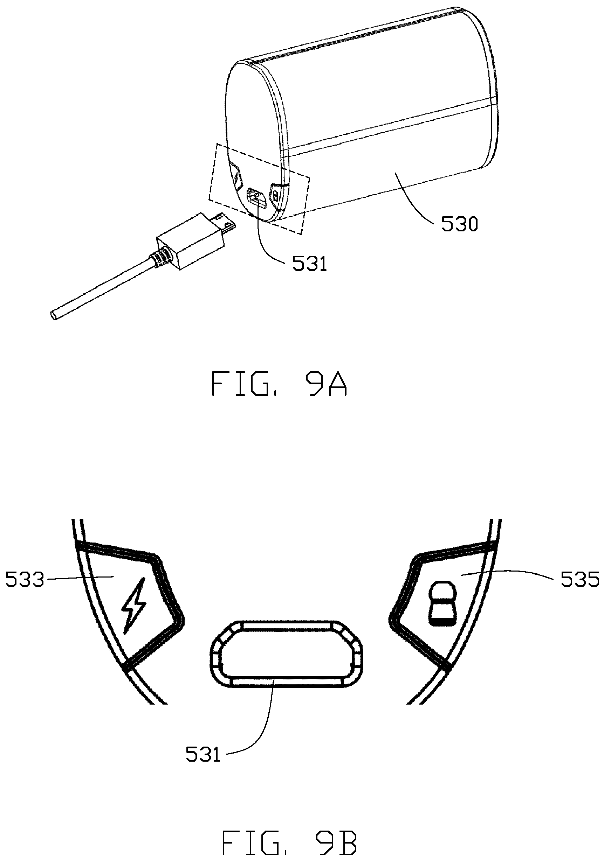

FIG. 9A shows the exemplary embodiment of the earphone case 50 in FIG. 8A-8B when closed. The earphone case 50 has a USB port 531 for charging the battery of the earphone case. When the earphone case 50 is connected to an external power source through a USB wire, the earphone 100 may be or may not be electrically coupled to the earphone case 50. FIG. 9B is an enlarged view of the dotted-line region in FIG. 9A, the container 530 of the earphone case 50 includes charging indicators. The charging indicators may be a case charging indicator 533 and an earphone charging indicator 535. The case charging indicator 533 may show a charging status of the earphone case 50, such as "not charging", "under charging", or "charging complete". The earphone charging indicator 535 may show a battery status of the earphones 100 when the earphone 100 is electrically coupled to the earphone case 50.

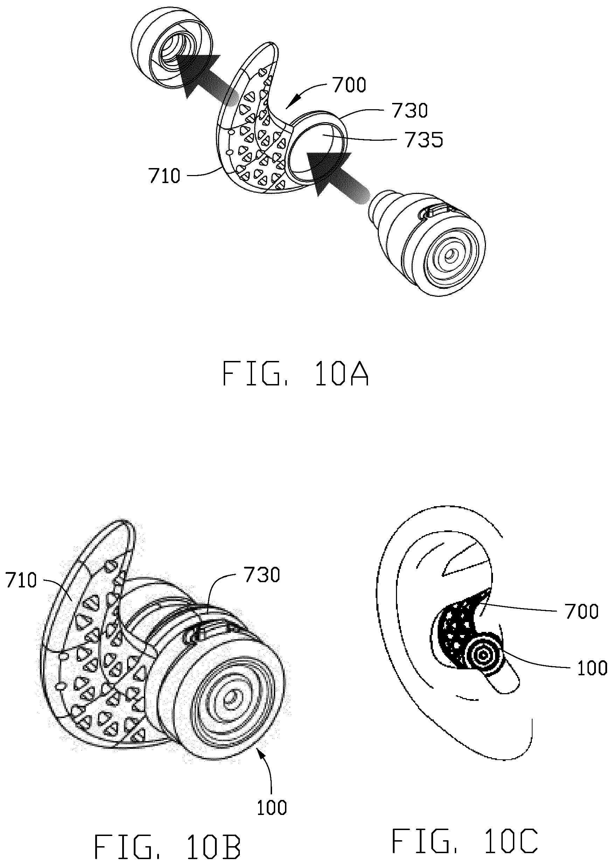

As FIGs. 10A-10C show, the earphone 100 may be coupled to a stabilizer 700. The stabilizer 700 is configured to increase wearing stability and comfort of the earphone on the user. As shown in FIG. 10A, the stabilizer 700 includes an auricular part 710 and an earphone part 730. The earphone part 730 has a round hole 735, thus the earphone 100 may be coupled to the stabilizer 700. The auricular part 710 of the stabilizer 700 is configured to fit an auricle of a user and provide wearing stability to the user. FIG. 10B illustrates the stabilizer 700 coupled with the earphone 100. In the present embodiment, the auricular part 710 has a crescent protrusion, which has a large curve and a relatively small curve. The large curve and the relatively small curve meet at the tip of the protrusion. FIG. 10C shows the earphone 100 coupled to the stabilizer 700 in an ear of a user. The auricular part 710 fits in a auricular concha of the ear where the large curve is in contact with an antihelix, the relatively small curve is in contact with a crus of helix, and the tip is fitted in a cymba of the auricular concha. The earphone part 730 is fitted in a cavity and under a targus and an anti targus of the ear. There may be a pair of the stabilizers 700 as a mirror image of each other so that the stabilizers 700 may fit into both right and left ears.

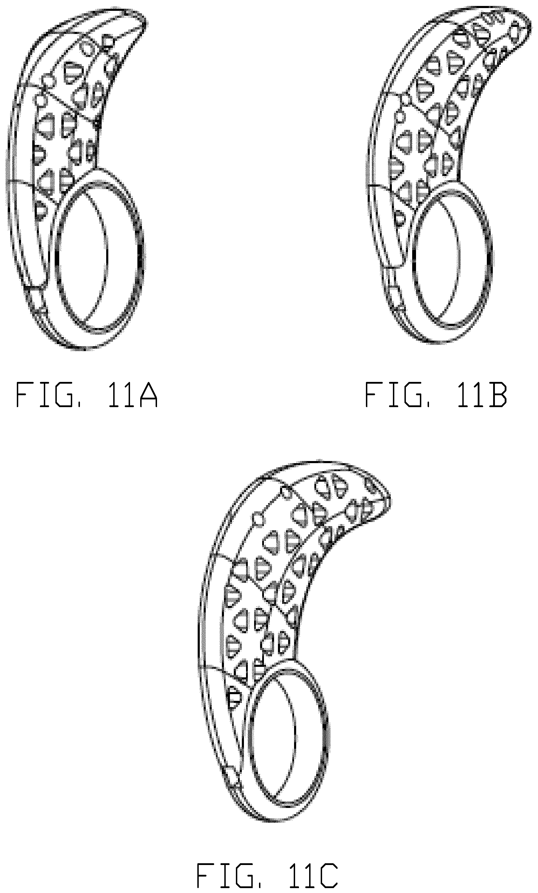

In the embodiments shown in FIGs. 11A-11C, the stabilizer 700 may have different specifications for different users. In FIG. 11A, the stabilizer has a turning angle on the large curve and the length of the auricular part is shorter than in other examples. In FIG. 11C, the degree of curvature of the large curve and the relatively small curve are greater than the degrees of curvature shown in FIG. 11B. Furthermore, the width of the auricular part may be different according the user's requirement.

The embodiments shown and described above are only examples of the present application. Therefore, many such details are neither shown nor described. Even though numerous characteristics and advantages of the present application have been set forth in the foregoing description, together with details of the structure and function of the present disclosure, the disclosure is illustrative only, and changes may be made in the detail, including in matters of shape, size and arrangement of the parts within the principles of the present disclosure, up to and including the full extent established by the broad general meaning of the terms used in the claims. It will therefore be appreciated that the embodiments described above may be modified within the scope of the claims.

## Claims

1. A method of controlling a wireless earphone, the wireless earphone comprising an input unit and a microcontroller, the method comprising:
storing a plurality of input modes and a plurality of instructions in the microcontroller;
providing relationships between the plurality of input modes and the plurality of instructions to the microcontroller;
receiving an input applied to the input unit;
recognizing, by the microcontroller, one input mode of the plurality of input modes based on the input;
executing, by the microcontroller, one of the plurality of instructions corresponding to the recognized input mode.

2. The method of claim 1, wherein the plurality of input modes comprises a first input mode; upon recognizing the first input mode, the microcontroller switches the wireless earphone from a power-off mode to a power-on mode or switches the wireless earphone from the power-on mode to the power-off mode.

3. The method of claim 2, wherein the plurality of input modes comprises a second input mode; upon recognizing the second input mode, the microcontroller switches the wireless earphone from the power-off mode to a device pairing mode, the device pairing mode of the wireless earphone is configured to search connections with an audio content providing device.

4. The method of claim 3, wherein the plurality of input modes comprises a third input mode, when the wireless earphone connects to the audio content providing device, upon recognizing the third input mode, the microcontroller switches the earphone from the power-on mode to a media mode, the media mode of the earphone is configured to playback audio signals of a media source provided by the audio content providing device.

5. The method of claim 4, wherein when the wireless earphone is set to the media mode, upon recognizing the first input mode, the microcontroller switches the wireless earphone from the media mode to the power-off mode; upon recognizing the third input mode, the microcontroller triggers the wireless earphone to pause or to continue playback of the audio signals.

6. The method of claim 5, wherein the plurality of input modes comprises a fourth input mode, when the wireless earphone is set to the media mode, upon recognizing the fourth input mode, the microcontroller switches from playback of one audio content of the media source to playback of another audio content of the media source.

7. The method of claim 3, wherein when the wireless earphone connects to the audio content providing device and the audio content providing device receives a call, the microcontroller automatically switches the wireless earphone from the power-on mode to a call mode.

8. The method of claim 7, wherein the plurality of input modes comprises a third input mode and a fourth input mode, when the wireless earphone is set to the call mode, upon recognizing the third input mode, the microcontroller triggers a call answering function; upon recognizing the fourth input mode, the microcontroller triggers a call rejection function.

9. The method of claim 3, wherein the plurality of input modes comprises a third input mode, when the wireless earphone connects to the audio content providing device and a call is made by the audio content providing device, and upon recognizing the third input mode, the microcontroller triggers a call canceling function.

10. The method of claim 3, wherein the plurality of input modes comprises a fifth input mode, and upon recognizing the fifth input mode, the microcontroller adjusts a sound volume of the wireless earphone.

11. The method of claim 1, wherein the input unit comprises a button, and the plurality of input modes comprises different activation durations of the button.

12. The method of claim 11, wherein the plurality of input modes further comprises a continuous activation-inactivation-activation pattern of the button.

13. A wireless earphone comprising:
an input unit; and
a microcontroller;
wherein the microcontroller storing a plurality of input modes, a plurality of instructions and relationships between the plurality of input modes and the plurality of instructions;
wherein the microcontroller is configured to recognize one input mode of the plurality of input modes based on an input applied to the input unit and execute one of the plurality of instructions corresponding to the recognized input mode; wherein the plurality of instructions comprises instructions to switch the wireless earphone to a predetermined operating mode.

14. The wireless earphone of claim 13, wherein the input unit comprises a button, the button is configured to be a push button or a toggle switch.

15. The wireless earphone of claim 14, wherein the plurality of input modes comprises different activation durations of the button.

16. The wireless earphone of claim 15, wherein the plurality of input modes further comprises a continuous activation-inactivation-activation pattern of the button.

17. The wireless earphone of claim 13, wherein the predetermined operating mode comprises a power-off mode, a power-on mode, and a device pairing mode, the device pairing mode is configured to search connections with an audio content providing device.

18. The wireless earphone of claim 17, wherein when the wireless earphone connects to the audio content providing device, the predetermined operating mode further comprises a media mode and a call mode, and the plurality of instructions further comprises instructions to trigger a predetermined function corresponding to the recognized input mode.

19. The wireless earphone of claim 13, further comprising a charge controller and charging electrodes, wherein the charging electrodes are coupled to the charge controller.

20. The wireless earphone of claim 13, further comprising a stabilizer, wherein the stabilizer comprises an auricular part to fit an auricle of a user, and the auricular part is substantially a crescent.
